# EUROPÄISCHE PATENTSCHRIFT

(11) **EP 0 827 251 B1**
(45) Veröffentlichungstag und Bekanntmachung des Hinweises auf die Patenterteilung: **27.12.2006**
(21) Anmeldenummer: 97114682.4
(22) Anmeldetag: 25.08.1997
(51) Int. Cl.: H02H 7/08

(54) **Elektrisches Niederspannungsschaltgerät**
Electrical low voltage switchgear
Interrupteur électrique à basse tension

(30) Priorität: 30.08.1996 DE 19635055
(43) Veröffentlichungstag der Anmeldung: 04.03.1998
(73) Patentinhaber: ABB PATENT GmbH, 68526 Ladenburg (DE)
(72) Erfinder: Wilmers, Andreas, 69124 Heidelberg (DE); Küber, Mathias, 68775 Ketsch (DE); Rempt, Bernd, 68219 Mannheim (DE)
(74) Vertreter: Miller, Toivo

(56) Entgegenhaltungen:
- DE-A- 4 123 563
- DE-A- 4 335 965
- DE-A- 4 445 961
- DE-U- 9 404 335
- GB-A- 2 178 597

## Beschreibung

Die Erfindung betrifft ein elektrisches Niederspannungsschaltgerät nach dem Oberbegriff des Anspruches 1.

Aus der DE 43 35 965 A1 ist ein Niederspannungsschaltgerät bekannt geworden, das einen netzseitigen Leistungsschalter und ein netzseitiges Schaltschütz umfaßt, die in einem Schaltergehäuse untergebracht sind und gleiche Abhebeströme aufweisen. In Reihe mit dem Leistungsschalter und dem Schaltschütz und zwischen den beiden befindet sich ein Sensor, dessen Ausgangssignale einer Elektronik zuführbar sind, die einen Bimetallauslöser, einen Schnellauslöser elektromagnetischer Bauart und einen weiteren elektromagnetischen Auslöser, den letzteren als unverzögerten Auslöser, simulieren. Die beiden elektromagnetischen Auslöser wirken auf das Schaltschloß des Leistungsschalters und auf das Schaltschütz gleichzeitig ein.

Aus der GB-A-2178 597 ist ein Niederspannungsschaltgerät bekannt geworden, das zum Starten und Stillsetzen von Elektromotoren, zum Motorschutz und zum Kurzschlussschutz dient und bei dem sich in einem Strompfad lediglich ein Kontaktsatz befindet, der zur Abschaltung von Last-und Überströmen geeignet ist. Das Schaltgerät besitzt einen ersten Sensor, der zur Strommessung dient, sodass bei niederen Überströmen und mittleren Kurzschlußströmen der Kontaktsatz geöffnet wird. Weiterhin ist ein Elektromagnet für hohe Kurzschlüsse vorgesehen. Eine elektronische Auswerteeinheit ist in der britischen Patentschrift nicht dargestellt.

Aus der Entgegenhaltung DE 4123 563 A ist ein Schaltgerät bekannt geworden, das ein Kontaktsatz aufweist, der durch drei Kontakttrennmittel betätigt wird: ein erstes Kontakttrennmittel in Form eines Elektromagneten, der über einen Betätigungshebel auf die Kontaktstücke einwirkt; der Elektromagnet wird extern betätigt und übt eine so genannte Schützfunktion aus. Das zweite Kontakttrennmittel umfasst einen Transformator, der eine elektronische Auswerteeinheit ansteuert, sodass Überströme abgeschaltet werden können. Die Stromversorgung erfolgt offensichtlich mittels einer besonderen Stromversorgung.

Aufgabe der Erfindung ist es, ein Niederspannungsschaltgerät der eingangs genannten Art zu schaffen, welches gegenüber dem Bekannten vereinfacht ausgebildet ist.

Diese Aufgabe wird erfindungsgemäß gelöst durch die kennzeichnenden Merkmale des Anspruches 1.

Demgemäß befinden sich in einem Strompfad innerhalb des Niederspannungsschaltgerätes lediglich ein Kontaktsatz, ein erster Sensor, der die niederen Überströme und mittlere Kurzschlußströme mißt, wobei seine Signale einer elektronischen Auswerteeinheit zuführbar sind, die dafür sorgt, daß bei diesen Strömen der Kontaktsatz geöffnet wird; für hohe Kurzschlußströme ist das Schlagankersystem vorgesehen, das direkt oder über ein Schaltschloß den Kontaktsatz öffnet. Der erste Sensor ist bevorzugt ein Stromwandlertransformator sein, der auch zur Stromversorgung der Auswerteeinheit dient, und die Auswerteeinheit kann ein Relais ansteuem, mit dem der Kontaktsatz als Schütz betätigbar ist.

Eine weitere Ausgestaltung der Erfindung kann dahin gehen, daß im Strompfad ein zweiter Sensor eingeschaltet ist, der zur Spannungsmessung dient und dessen Ausgangssignale ebenfalls der Auswerteeinheit zuführbar sind. Mit diesem zweiten Sensor können einerseits Unterspannungen detektiert werden, und darüberhinaus können die vom ersten und zweiten Sensor herkommenden Signale in der Auswerteeinheit zur Detektierung z. B. der Motorbelastung mit cosϕ benutzt werden; die Auswerteeinheit schaltet dann den Motor bei Über- oder Unterschreitung eines bestimmten cosϕ-Wertes ab.

Gemäß einer weiteren Ausführungsform der Erfindung kann die elektronische Auswerteeinheit einen Mikroprozessor aufweisen, mit dem die Sensorsignale auswertbar sind.

Das Relais kann auch vom Schaltschloß ansteuerbar sein.

Dies erfolgt in zweckmäßiger Weise dadurch, daß zur Ansteuerung des Relais eine Schalteranordnung mit wenigstens einer Unterbrechungsstelle mit dem Relais in Reihe vorgesehen ist, die von der Auswerteeinheit und/oder vom Schaltschloß betätigbar ist.

Bei zwei Unterbrechungsstellen der Schalteranordnung kann eine vom Schaltschloß und die andere von der Auswerteeinheit betätigbar sein.

Dabei kann die Schalteranordnung mechanische und/oder elektronische Unterbrechungsstellen aufweisen.

Das Relais kann auch durch Fernbedienung über die Auswerteeinheit ansteuerbar sein.

Darüberhinaus kann an der Auswerteeinheit ein Busanschluß für eine Busleitung zum Fern-, Ein-, Ausschalten, zur Steuerung und/oder zum Fernanzeigen der von der Auswerteeinheit verarbeiteten Signale angeschlossen sein.

Bei bekannten Motorschutzschaltern werden die niedrigen Überströme normalerweise mittels Thermobimetall überwacht; der erste Sensor mit der Auswerteeinheit ersetzt das Thermobimetall und einen Auslöser für mittlere Kurzschlußströme.

Anhand der Zeichnung, in der schematisch ein Ausführungsbeispiel der Erfindung in Form einer Schaltung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schaltungsanordnung für ein erfindungsgemäßes Niederspannungsschaltgerät, und
- Fig. 2: eine Variante der Anordnung betreffend Schalter 23 der Fig. 1.

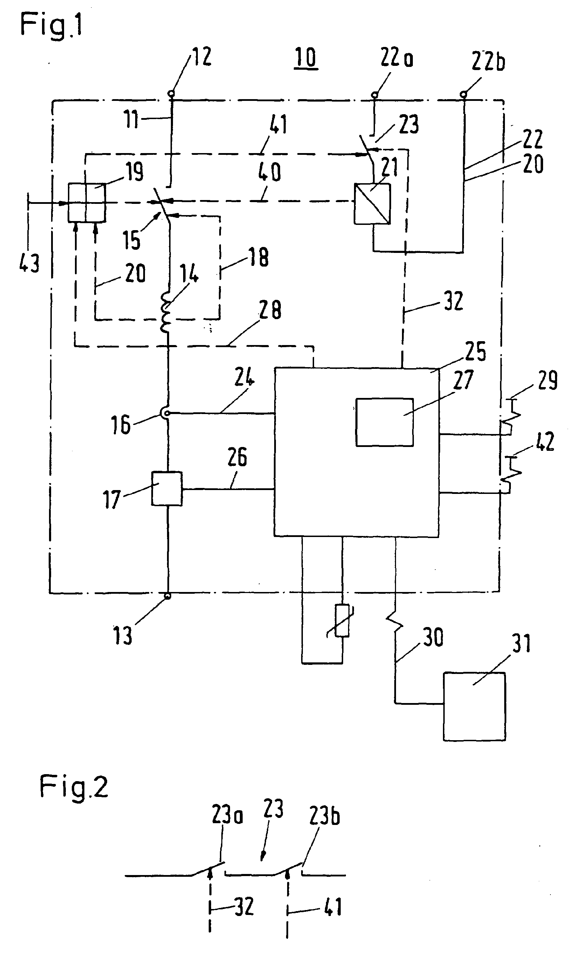

Ein elektrisches Niederspannungsschaltgerät, das die Bezugsziffer 10 trägt, besitzt einen Hauptstrompfad 11, der in Fig. 1 einphasig gezeichnet ist, der aber auch mehrphasig sein kann, mit Anschlußklemmen 12 und 13. Im Hauptstrompfad 11 liegen in Reihe die Spule 14 eines Schlagankermagnetsystems, ein Kontaktsatz 15, ein erster Sensor 16 zur Messung des durch den Hauptstrompfad 11 fließenden Stromes und ein zweiter Sensor 17 zur Spannungsmessung. Das Schlagankermagnetsystem mit der Spule 14 wirkt über die Wirklinie 18 direkt auf den Kontaktsatz 15 sowie wie auf ein Schaltschloß 19 über eine Wirklinie 20. Auf den Kontaktsatz 15 wirkt über eine Wirklinie 40 ein Relais 21, wodurch eine Schützfunktion erzielt ist. Das Relais 21 ist in einer über Anschlußklemmen 22a, 22b an Spannung liegenden Steuerleitung 22 eingeschaltet, die einen Steuerschalter 23 in Reihe zum Relais 21 enthält, der beispielsweise ein elektronischer Schalter, z. B. ein Transistor, oder ein mechanischer Schalter sein oder der aus zwei Kontakt- oder -unterbrecherstellen 23a und 23b bestehen kann, siehe weiter unten Fig. 2. Der Steuerschalter 23 kann auch über eine Wirklinie 41 vom Schaltschloß 19 betätigt werden.

Die Ausgangssignale des ersten Sensors 16 werden über eine Leitung 24 einer Auswerteeinheit 25 zugeführt, ebenso wie die Signale des Spannungssensors 17, die über eine Leitung 26 der Auswerteeinheit 25 zugeführt werden. Bei bestimmten Niederspannungsschaltgeräten wäre ein solcher Spannungssensor nicht erforderlich.

Die Auswerteeinheit 25 enthält einen Mikroprozessor 27 und in der Auswerteeinheit 25 wird ein Bimetallauslöser und ein elektromagnetischer Auslöser für mittlere Kurzschlußströme simuliert; die hohen Kurzschlußströme werden von dem Schlagankermagnetsystem mit der Spule 14 abgeschaltet, wobei der Schlaganker direkt auf den beweglichen Teil des Kontaktsatzes schlägt und darübehrinaus auch auf das Schaltschloß.

Wenn der Sensor 16 mit der Auswerteeinheit 25 einen Überstrom detektiert hat, dann wird über eine Wirklinie 28 das Schaltschloß 19 betätigt, so daß der Kontaktsatz 15 bleibend geöffnet ist. Über einen Fernantrieb 29, der mit der Auswerteeinheit 25 verbunden ist, kann der Schalter 23 über die Wirklinie 32 geschlossen werden, so daß der Kontaktsatz 15 über das Relais 21 und die Wirklinie 40 geöffnet werden kann.

Es besteht auch die Möglichkeit, an der Auswerteeinheit 25 eine Busleitung 30 anzuschließen, die die ausgewerteten Signale einer zentralen Steuereinheit 31 zuführt. Über die zentrale Steuereinheit 31 kann das Niederspannungsschaltgerät betätigt werden und zwar für eine Steuer- oder Schützfunktion und eine Ausschaltfunktion; zur Erzielung einer Steuer-Schützfunktion ist die Auswerteeinheit 25 über die Wirklinie 32 mit dem Schalter 23 verbunden.

Wenn die Auswerteeinheit 25 nur für einen einfachen Überlastschutz ausgelegt werden soll, dann ist der Mikroprozessor 27 nicht erforderlich und die Auswerteeinheit 25 kann mit dem Strom des Sensors 16 versorgt werden. In dem Fall, wenn ein Mikroprozessor 27 vorhanden ist, ist eine zusätzliche Stromversorgung (nicht gezeigt) für die Auswerteeinheit 25 notwendig.

Wenn der Stromsensor 16 in geeigneter Weise ausgebildet ist, dann kann der Stromsensor als Stromwandlertransformator gleichzeitig zur Versorgung der Auswerteeinheit 25 benutzt werden.

Der Kontaktsatz 15 kann eine Kontaktstelle mit einem Kontakthebel, an dem ein bewegliches Kontaktstück angeordnet ist, und ein Festkontaktstück, oder eine Doppelkontaktstelle mit zwei Festkontaktstücken und zwei an einer Kontaktbrücke angebrachten beweglichen Kontaktstücken aufweisen.

Der Schalter 23 kann auch, wie in Fig. 2 dargestellt, durch zwei Kontaktstellen 23a und 23b gebildet sein; auf die eine Kontaktstelle 23a wirkt die Auswerteeinheit 25 über die Wirklinie 32, und auf die andere Kontaktstelle 23b wirkt das Schaltschloß über die Wirklinie 41. Beide Wirklinien können, wie in Fig. 1 gezeigt ist, auch auf eine Kontaktstelle einwirken, und bei der Ausführung nach Fig. 2 ist die Kontaktstelle 23a mechanisch und die Kontaktstelle 23b elektronisch; selbstverständlich auch kann die Kontaktstelle 23b auch durch einen mechanischen Schalter gebildet sein.

Die zentrale Steuereinheit 31 kann als speicherprogrammierbare Steuerung (SPS) ausgebildet sein.

Wenn das Schaltschloß 19 von der Auswerteeinheit 25 betätigt werden soll, also über die Wirklinie 28 ausgeschaltet werden soll, dann kann die Auswerteeinheit 25 einen nicht näher dargestellten Arbeitsstromauslöser ansteuern, der das Schaltschloß 19 auslöst und den Kontaktsatz 15 öffnet. Es besteht selbstverständlich auch die Möglichkeit, daß über die Wirklinie 32 der Schalter 23 geschlossen wird, so daß das Relais über die Wirklinie 40 die Kontaktstelle 15 öffnet. Selbstverständlich kann das Schaltschloß auch über die Wirklinie 28 geöffnet werden.

Nach einer Auslösung kann die Auswerteeinheit 25 von der zentralen Steuereinheit 31 oder mittels eines Schaltknopfes 42 vor Ort zurückgesetzt werden. Wenn das Schaltschloß 19 ausgelöst hat, dann kann über einen Einschaltknopf 43 das Schaltschloß eingeschaltet werden; in diesem Fall wird über eine umgekehrte Wirklinie 28 die Auswerteeinheit 25 zurückgesetzt.

Der Fernantrieb 29 ist manuell zu betätigen; die Auswerteeinheit 25 und damit das Niederspannungsschaltergerät 10 können über den Fernantrieb 29 von Hand eingeschaltet werden. Dabei gibt die Auswerteschaltung 25 über die Wirklinie 32 einen Impuls an den Schalter 23, so daß das Relais 21 über die Wirklinie 40 die Kontaktstelle schließt.

Mit den Sensoren 16 und 17 können in der Auswerteeinheit 25 weitere Werte ermittelt werden, beispielsweise ob auf der Leitung 11 Unterspannung ansteht oder ob ein Überstrom vorhanden ist; es besteht auch die Möglichkeit, einen Motorbelastungswächter zu simmulieren. Ein solcher Motorbelastungswächter ist ein cosϕ-Auswertegerät, durch das der cosϕ gemessen wird. Wenn bestimmte cosϕ-Werte über- oder unterschritten werden, wird ein Signal erzeugt, ebenso wenn eine Überbelastung erkannt wird. Wenn z. B. ein Keilriemen bei einem Motorlüfter reißt, dann wird dies detektiert und der sinnlos laufende Motor abgeschaltet.

Der Stromwandler 16 kann auch als Stromwandlertransformator ausgebildet sein, so daß damit die Elektronik der Auswerteeinheit 25 mit Strom versorgt wird.

## Patentansprüche

1. Niederspannungsschaltgerät zum Starten und Stillsetzen von Elektromotoren, zum Motorschutz und zum Kurzschlußschutz, bei dem in einem Strompfad (11) innerhalb des Niederspannungsschaltgerätes (10) lediglich ein Kontaktsatz (15), der zur Abschaltung von Last- und Überströmen geeignet ist, ein erster Sensor (16), der zur Strommessung dient, und ein Elektromagnet-, vorzugsweise ein Schlagankersystem (14), das bei hohen Kurzschlußströmen anspricht vorgesehen sind, wobei die Signale des ersten Sensors (16) einer elektronischen Auswerteeinheit (25) zuführbar sind, sodass bei niederen Überströmen und mittleren Kurzschlußströmen der Kontaktsatz über die Auswerteeinheit (25) geöffnet wird, **dadurch gekennzeichnet, dass** der erste Sensor (16) ein Stromwandlertransformator ist, der auch zur Stromversorgung der Auswerteeinheit (25) dient, und dass die Auswerteeinheit (25) ein Relais (21) ansteuert, mit dem der Kontaktsatz als Schütz betätigbar ist.

2. Niederspannungsschaltgerät nach Anspruch 1, **dadurch gekennzeichnet, daß** im Strompfad (11) ein zweiter Sensor (17) eingeschaltet ist, der zur Spannungsmessung dient und dessen Ausgangssignale ebenfalls der Auswerteeinheit (25) zuführbar sind.

3. Niederspannungsschaltgerät nach Anspruch 2, **dadurch gekennzeichnet, daß** die vom ersten und zweiten Sensor (16, 17) herkommenden Signale in der Auswerteeinheit (25) zur Detektierung der Motorbelastung mit cosϕ benutzbar sind und daß die Auswerteeinheit (25) den Motor bei Über- oder Unterschreitung eines bestimmten cosϕ-Wertes abschaltet.

4. Niederspannungsschaltgerät nach einem der vorherigen Ansprüche, **dadurch gekennzeichnet, daß** die elektronische Auswerteeinheit (25) einen Mikroprozessor (27) aufweist, mit dem die Sensorsignale auswertbar sind.

5. Niederspannungsschaltgerät nach Anspruch 1, **dadurch gekennzeichnet, daß** das Relais (21) auch vom Schaltschloß (19) ansteuerbar ist.

6. Niederspannungsschaltgerät nach einem der vorherigen Ansprüche, **dadurch gekennzeichnet, daß** zur Ansteuerung des Relais (21) eine Schalteranordnung (23) mit wenigstens einer Unterbrechungsstelle mit dem Relais (21) in Reihe vorgesehen ist, die von der Auswerteeinheit (25) und/oder vom Schaltschloß (19) betätigbar ist.

7. Niederspannungsschaltgerät nach Anspruch 6, **dadurch gekennzeichnet, daß** bei zwei Unterbrechungsstellen (23a, 23b) der Schalteranordnung (23) eine vom Schaltschloß (19) und eine von der Auswerteeinheit (25) betätigbar ist.

8. Niederspannungsschaltgerät nach Anspruch 7, **dadurch gekennzeichnet, daß** die Schalteranordnung (23) mechanische und/oder elektronische Unterbrechungsstellen aufweist.

9. Niederspannungsschaltgerät nach einem der vorherigen Ansprüche, **dadurch gekennzeichnet, daß** das Relais (21) auch durch Fernbedienung (29) über die Auswerteeinheit (25) ansteuerbar ist.

10. Niederspannungsschaltgerät nach einem der vorherigen Ansprüche, **dadurch gekennzeichnet, daß** an der Auswerteeinheit (25) ein Busanschluß für eine Busleitung (30) zum Fern-, Ein-, Ausschalten, zur Steuerung und/oder zum Fernanzeigen der von der Auswerteeinheit (25) verarbeiteten Signale angeschlossen ist.

## Claims

1. A low-voltage switching device for starting and stopping electromotors, for motor protection and for short-circuit protection, in which merely one set of contacts (15) suitable for cutting off load currents and overcurrents, a first sensor (16) used for current measurement, and an electromagnet, preferably a striker armature system (14), responding to high short-circuit currents are provided in the current path (11) within the low-voltage switching device (10), with the signals of the first sensor (16) being supplied to an electronic evaluation unit (25), so that in the case of low overcurrents and medium short-circuit currents the set of contacts is opened via the evaluation unit (25), **characterized in that** the first sensor (16) is a current transformer which is also used for the power supply of the evaluation unit (25) and that the evaluation unit (25) triggers a relay (21) with which the set of contacts can be actuated as a contactor.

2. A low-voltage switching device according to claim 1, **characterized in that** a second sensor (17) is switched into the current path (11) which is used for voltage measurement and whose output signals can also be supplied to the evaluation unit (25).

3. A low-voltage switching device according to claim 2, **characterized in that** the signals coming from the first and second sensor (16, 17) can be used in the evaluation unit (25) for detecting motor load with cosϕ and that the evaluation unit (25) cuts off the motor in the case of exceeding or falling below a specific cosϕ value.

4. A low-voltage switching device according to one of the preceding claims, **characterized in that** the electronic evaluation unit (25) comprises a microprocessor (27) with which the sensor signals can be evaluated.

5. A low-voltage switching device according to claim 1, **characterized in that** the relay (21) can also be triggered by the latching mechanism (19).

6. A low-voltage switching device according to one of the preceding claims, **characterized in that** for triggering the relay (21) a switch arrangement (23) is provided with at least one break point with the relay (21) in series, which switch arrangement can be actuated by the evaluation unit (25) and/or the latching mechanism (19).

7. A low-voltage switching device according to claim 6, **characterized in that** of the two break points (23a, 23b) of the switch arrangement (23) one can be actuated by the latching mechanism (19) and one by the evaluation unit (25).

8. A low-voltage switching device according to claim 7, **characterized in that** the switch arrangement (23) comprises mechanical and/or electronic break points.

9. A low-voltage switching device according to one of the preceding claims, **characterized in that** the relay (21) can also be triggered by remote control (29) via the evaluation unit (25).

10. A low-voltage switching device according to one of the preceding claims, **characterized in that** a bus connection for a bus line (30) for remote switching, switching on and switching off, for controlling and/or for remote display of the signals processed by the evaluation unit (25) is connected to the evaluation unit (25).

## Revendications

1. Interrupteur à basse tension pour démarrer et arrêter des moteurs électriques, pour assurer la protection de moteurs et la protection contre les courts-circuits, avec dans un trajet de courant (11) à l'intérieur de l'interrupteur à basse tension (10) seulement une série de contacts (15) pour assurer la coupure en cas de surintensité, un premier capteur (16) pour mesurer l'intensité et un système électromagnétique de préférence avec induit battant (14) réagissant à des intensités de court-circuit élevées, les signaux du premier capteur (16) étant envoyés à une unité d'évaluation électronique (25), de sorte que pour des surintensités faibles et des intensités moyennes de court-circuit, l'unité d'évaluation (25) est ouverte, **caractérisé en ce que** le premier capteur (16) est un transformateur de conversion d'intensité servant également à alimenter l'unité d'évaluation (25) qui elle-même commande un relais (21) permettant d'actionner la série de contacts en tant que protection.

2. Interrupteur à basse tension selon la revendication 1, **caractérisé en ce que** dans le trajet de courant (11) est monté un second capteur (17) servant à mesurer la tension et dont les signaux de sortie peuvent être également envoyés à l'unité d'évaluation (25).

3. Interrupteur à basse tension selon la revendication 2, **caractérisé en ce que** les signaux provenant du premier et du second capteur (16, 17) peuvent être utilisés dans l'unité d'évaluation (25) pour détecter par le cos ϕ la charge du moteur, de sorte que cette unité coupe le moteur quand une certaine valeur de cos ϕ est franchie vers le haut et vers le bas.

4. Interrupteur à basse tension selon u ne des revendications précédentes, **caractérisé en ce que** l'unité électronique d'évaluation (25) comprend un microprocesseur (27) par lequel peuvent être évalués les signaux du capteur.

5. Interrupteur à basse tension selon la revendication 1, **caractérisé en ce que** le relais (21) peut être commandé également par le verrouillage de connexion (19).

6. Interrupteur à basse tension selon une des revendications précédentes, **caractérisé en ce que** pour commander le relais (21), est prévu en série avec celui-ci un système de contacteurs comprenant au moins un point de coupure et qui peut être actionné par l'unité d'évaluation (25) et/ou par le verrouillage de connexion (19).

7. Interrupteur à basse tension selon la revendication 6, **caractérisé en ce qu'**avec un système de contacteurs (23) comprenant deux points de coupure (23a, 23b), l'un de ceux-ci peut être actionné par le verrouillage de connexion (19) et l'autre par l'unité d'évaluation (25).

8. Interrupteur à basse tension selon la revendication 7, **caractérisé en ce que** le système de contacteur (23) présente des points de coupure mécaniques et/ou électroniques.

9. Interrupteur à basse tension selon une des revendications précédentes, **caractérisé en ce que** le relais (21) peut également être actionné par une commande à distance (29) par l'intermédiaire de l'unité d'évaluation (25).

10. Interrupteur à basse tension selon une des revendications précédentes, **caractérisé en ce qu'**à l'unité d'évaluation (25) est relié un raccord de bus pour un conducteur de bus (30) servant à distance pour connecter et couper, afin de commander et/ou d'indiquer à distance les signaux traités par l'unité d'évaluation (25).
